# EUROPÄISCHE PATENTSCHRIFT

(11) **EP 1 488 175 B1**
(45) Veröffentlichungstag und Bekanntmachung des Hinweises auf die Patenterteilung: **28.06.2006**
(21) Anmeldenummer: 03717134.5
(22) Anmeldetag: 06.03.2003
(51) Int. Cl.: F24F 13/22

(54) **LUFTAUSTAUSCHSYSTEM FÜR DIE BELÜFTUNG EINES RAUMS EINES GEBÄUDES MIT EINEM WÄRMETAUSCHER**
AIR-EXCHANGE SYSTEM COMPRISING A HEAT EXCHANGER, FOR VENTILATING A ROOM OF A BUILDING
SYSTEME DE RENOUVELLEMENT D'AIR COMPRENANT UN ECHANGEUR THERMIQUE, CONCU POUR AERER UNE PIECE D'UN BATIMENT

(30) Priorität: 08.03.2002 DE 20203758 U
(43) Veröffentlichungstag der Anmeldung: 22.12.2004
(73) Patentinhaber: Meltem Wärmerückgewinnung GmbH & Co. KG, 82239 Alling (DE)
(72) Erfinder: REYNARTZ, Armin, 82239 Alling (DE)
(74) Vertreter: Schweiger, Martin
(86) Internationale Anmeldenummer: PCT/DE2003/000728
(87) Internationale Veröffentlichungsnummer: WO 2003/076851

(56) Entgegenhaltungen:
- PATENT ABSTRACTS OF JAPAN vol. 2000, no. 20, 10. Juli 2001 (2001-07-10) & JP 2001 059637 A (MATSUSHITA ELECTRIC IND CO LTD), 6. März 2001 (2001-03-06)
- PATENT ABSTRACTS OF JAPAN vol. 1999, no. 14, 22. Dezember 1999 (1999-12-22) & JP 11 264592 A (MATSUSHITA SEIKO CO LTD), 28. September 1999 (1999-09-28)
- PATENT ABSTRACTS OF JAPAN vol. 011, no. 199 (M-602), 26. Juni 1987 (1987-06-26) & JP 62 022939 A (MATSUSHITA SEIKO CO LTD), 31. Januar 1987 (1987-01-31)
- PATENT ABSTRACTS OF JAPAN vol. 010, no. 253 (M-512), 29. August 1986 (1986-08-29) & JP 61 079925 A (MATSUSHITA ELECTRIC IND CO LTD), 23. April 1986 (1986-04-23)

## Beschreibung

Die Erfindung betrifft ein Luftaustauschsystem für die Belüftung eines Raums eines Gebäudes mit einem Wärmetauscher.

Zur Gewährleistung gleichbleibend hoher Atemluftqualität in Wohn- und Arbeitsräumen von Gebäuden findet oft ein Luftaustausch mit der Umwelt statt. Dabei wird kühlere, unverbrauchte Außenluft in das Gebäudeinnere geleitet und gleichzeitig wärmere, verbrauchte Abluft aus dem Gebäudeinneren nach draußen geleitet. Aus Energieeffizienzgründen wird die Wärmeenergie der Abluft oft dazu verwendet, um die hineinströmende Außenluft zu erwärmen.

Dabei kommen Wärmetauscher zum Einsatz (siehe z.B. JP-62-022939), die Wärme in Richtung eines Temperaturgefälles zwischen zwei fluiden Stoffströmen übertragen. Wärmetauscher dienen der gezielten Zustandsänderung dieser Fluide, insbesondere dem Erwärmen und dem Abkühlen. Es sind Rohrbündel-, Rippenrohr-, Platten-, Spiral-, Spiralrohr-Doppelmantel- und Wickelwärmetauscher bekannt.

Beim Abkühlen der verbrauchten Abluft in dem Wärmetauscher entstehen an der Abkühlseite, insbesondere im Auslaßbereich der Abkühlseite, häufig große Mengen von Kondenswasser. Dieses Kondenswasser kann in einem Behälter aufgefangen werden, der regelmäßig mit großem Aufwand geleert werden muß, weil sonst der belüftete Raum unerwünschterweise feucht wird. Es ist auch denkbar, die Luftströmungsrichtung im Wärmetauscher regelmäßig automatisch umzudrehen, damit das Kondenswasser von warmer und trockener Luft aufgenommen wird. Dies beeinträchtigt den Wirkungsgrad des Luftaustauschsystems.

Es ist daher Aufgabe der Erfindung, ein einfach handzuhabendes Luftaustauschsystem mit gutem Wirkungsgrad anzugeben, bei dem die Problematik des entstehenden Kondenswassers wirkungsvoll behandelt ist.

Diese Aufgabe wird durch den Gegenstand der unabhängigen Ansprüche gelöst. Vorteilhafte Ausgestaltungen ergeben sich aus den jeweiligen Unteransprüchen.

Das erfindungsgemäße Luftaustauschsystem für die Belüftung eines Raumes eines Gebäudes gliedert sich in einen Wärmetauscher sowie in wenigstens einen Lüfter mit Lüfterschaufeln. Der Wärmetauscher kann dabei als Rohrbündel-, als Rippenrohr-, als Spiral-, als Spiralrohr-Doppelmantel-, als Wickelwärme- oder insbesondere als Plattenwärmetauscher ausgebildet sein. Der erfindungsgemäße Wärmetauscher weist eine Erwärmseite sowie eine Abkühlseite auf. Dabei werden diejenigen Bereiche des Wärmetauschers, die von der zu erwärmenden Luft durchströmt werden, als Erwärmseite bezeichnet und diejenigen Bereiche des Wärmetauschers, die von der abzukühlenden Luft durchströmt werden, werden als Abkühlseite bezeichnet. Der erfindungsgemäße Lüfter bzw. die erfindungsgemäßen Lüfter ist bzw. sind im Auslaßbereich der Abkühlseite des Wärmetauschers angeordnet und er weist bzw. sie weisen bewegliche Lüfterschaufeln zur Förderung von Luft durch die Abkühlseite auf.

Der Wärmetauscher ist dabei so angeordnet, daß sich an der Abkühlseite infolge der Abkühlung bildendes Kondenswasser durch Schwerkraftwirkung nach unten in den Bereich der Lüfterschaufeln des Lüfters fließt und durch die Bewegung der Lüfterschaufeln in eine Fortluftöffnung des Luftaustauschsystems förderbar ist. Über die Fortluftöffnung gelangt das Kondenswasser vorzugsweise auf die Außenseite des Gebäudes.

Ein Grundgedanke des erfindungsgemäßen Luftaustauschsystems besteht darin, daß das Kondenswasser, das sich an der Abkühlseite des Wärmetauschers bildet, durch Schwerkraftwirkung in den Bereich des Lüfters fließt, der wiederum dieses Kondenswasser aus dem Luftaustauschsystem befördert, insbesondere auf die Außenseite des Gebäudes.

Das bei dem Betrieb eines Wärmetauschers entstehende Kondenswasser wird einfach und zuverlässig ohne zusätzlichen Aufwand aus dem Bereich des Wärmetauschers entfernt. Dabei wird vorteilhafterweise auf eine bereits im Luftaustauschsystem vorhandene Komponente, nämlich auf wenigstens einen im Auslaßbereich der Abkühlseite des Wärmetauschers angeordneten Lüfter zurückgegriffen, dessen Lüfterschaufeln neben ihrer ursprünglichen Aufgabe der Luftbewegung bzw. der Luftansaugung die zusätzliche Aufgabe des Herausbeförderns von Kondenswasser aus dem Bereich der Lüfters wahrnehmen.

Gemäß einer ersten Ausführungsform der Erfindung ist der Lüfter als Radiallüfter ausgebildet. Radiallüfter eignen sich besonders gut zum Herausbefördern von Kondenswasser aus einem Luftaustauschsystem, weil eine gute Abdichtung des Antriebsmotors des Radiallüfters gegen das geförderte Wasser gegeben ist. Dabei ist eine unterschiedliche Ausrichtung der Drehachse des Radiallüfters in Bezug zu der Strömungsrichtung der durch die Abkühlseite strömenden Luft möglich. Besonders vorteilhaft ist es, wenn die Drehachse des Radiallüfters im wesentlichen parallel zu einer Strömungsrichtung der durch die Abkühlseite des Wärmetauschers strömenden Luft ausgerichtet ist. Bei dieser Ausführungsform der Erfindung kann eine besonders große Menge von Kondenswasser pro Zeiteinheit aus dem Luftaustauschsystem hinausbefördert werden. Dadurch wird ein besonders zuverlässiger Betrieb des erfindungsgemäßen Luftaustauschsystems mit einem hohen Wirkungsgrad erreicht. Es ist ebenfalls möglich, den bzw. die Lüfter als Axiallüfter vorzusehen.

Eine weitere Ausführungsform der Erfindung sieht einen trichterförmigen Kondenswasserleitrahmen zwischen dem Wärmetauscher und einem bzw. dem Lüfter vor. Dieser Kondenswasserleitrahmen sorgt dafür, daß das gesamte im Bereich des Wärmetauschers entstehende Kondenswasser zuverlässig in den Lüfter geleitet wird. Durch die trichterartige Form des Kondenswasserleitrahmens ist ein sicherer Übergang des Kondenswassers von dem Wärmetauscher zu dem Lüfter gewährleistet. Durch das Vorsehen von Kondenswasserleitrahmen können Lüfter unterschiedlicher Größe auf einfache Weise mit verschiedenen Wärmetauschern kombiniert werden.

In einer vorteilhaften Weiterbildung der Erfindung ist eine Lüfterabdeckung auf dem Lüfter vorgesehen, und zwar an der dem Auslaßbereich der Abkühlseite des Wärmetauschers zugewandten Seite. Diese Lüfterabdeckung weist eine vorzugsweise mittige Luftzuführungsöffnung sowie eine Kondenswasserzuführungsöffnung auf, die an einer in Bezug auf die Schwerkraftrichtung unteren Stelle vorgesehen ist. Ein Luftaustauschsystem mit einem eine solche Lüfterabdeckung aufweisenden Lüfter weist besonders günstige Strömungseigenschaften auf und gewährleistet eine sichere Einleitung des Kondenswassers aus dem Wärmetauscher in den Lüfter.

Besonders vorteilhaft ist es, wenn der Wärmetauscher und/oder der bzw. die Lüfter gegenüber der Erdanziehungsrichtung geneigt ausgerichtet sind, und zwar vorzugsweise um einen Winkel von 45° geneigt. Dann kann das im Wärmetauscher entstehende Kondenswasser besonders effektiv aus dem Luftaustauschsystem hinausbefördert werden.

Wenn das Luftaustauschsystem von einem Gehäuse mit einer Gehäusevorderseite und mit einer Gehäuserückseite umschlossen ist, so kann das gesamte Luftaustauschsystem leicht transportiert und flexibel montiert werden. Des weiteren bewirkt ein solches Gehäuse einen Schutz des Wärmetauschers sowie des bzw. der Lüfter von äußeren Einflüssen.

Wenn das Luftaustauschsystem eine Ablufteinlaßöffnung sowie eine Zulufteinlaßöffnung an seiner Vorderseite aufweist, so ist es einfach in Betrieb zu nehmen, indem das Gehäuse so an einer Wand befestigt wird, daß seine Gehäusevorderseite in Richtung des Innenraums ausgerichtet ist.

Weist das Luftaustauschsystem an seiner Gehäuserückseite eine Außenlufteinlaßöffnung sowie eine Fortluftauslaßöffnung auf, so ist es vorteilhafterweise derart montierbar, daß seine Gehäuserückseite zu einer Außenseite des Gebäudes gerichtet ist.

Das Vorsehen eines Luftaustauschsystems mit einer Gehäusevorderseite, die eine Ablufteinlaßöffnung sowie eine Zulufteinlaßöffnung beinhaltet, sowie mit einer Gehäuserückseite, die eine Außenlufteinlaßöffnung sowie eine Fortluftauslaßöffnung beinhaltet, bewirkt, daß das Luftaustauschsystem an verschiedenen Stellen, insbesondere an verschiedenen Wänden verschiedener Räume montiert und flexibel eingesetzt werden kann.

Die Erfindung betrifft auch ein beschriebenes Luftaustauschsystem mit einer Außenwand, an deren Innenseite die Gehäuserückseite angebracht ist. Dabei verläuft in der Außenwand ein insbesondere schräg nach unten geneigtes Fortluftauslaßrohr, das sowohl zum Ausleiten der gekühlten und getrockneten Abluft sowie zum Ausleiten des entstandenen Kondenswassers geeignet ist. Der Rand der Fortluftauslaßöffnung des Luftaustauschsystems schließt dabei mit dem Rand des Fortluftauslaßrohrs ab. Dabei ist auch eine außenwandseitige Außenlufteinlaßöffnung vorgesehen, die das Hineinströmen von Außenluft durch die Au-ßenlufteinlaßöffnung in das Luftaustauschsystem erlaubt.

Die Erfindung ist in den Zeichnungen anhand eines Ausführungsbeispiels näher veranschaulicht.
- Figur 1: zeigt eine schematische Darstellung einer Draufsicht auf ein Luftaustauschsystem 1 gemäß einem Ausführungsbeispiel,
- Figur 2: zeigt eine schematische, perspektivische Darstellung des in Figur 1 gezeigten Plattenwärmetauschers 2 sowie eine grafische Veranschaulichung der den Plattenwärmetauscher 2 durchfließenden Luftströme gemäß dem Ausführungsbeispiel,
- Figur 3: zeigt eine schematische Darstellung eines Querschnitts entlang der Schnittlinie A-A eines an einer Außenwand 17 befestigten Luftaustauschsystems 1 gemäß dem Ausführungsbeispiel,
- Figur 4: zeigt eine schematische Darstellung eines Querschnitts entlang der Schnittlinie B-B des an der Außenwand 17 befestigten Luftaustauschsystems 1 gemäß dem Ausführungsbeispiel,
- Figur 5: zeigt eine schematische Darstellung einer Draufsicht auf einen in einem Fortluft-Lüftergehäuse 5 angeordneten Fortluftradiallüfter 6 senkrecht zu seiner Drehachse gemäß dem Ausführungsbeispiel,
- Figur 6: zeigt eine schematische Darstellung einer Draufsicht auf eine Lüfterschneckenabdeckung 24 der in Figur 5 gezeigten Lüfterschnecke 28 gemäß dem Ausführungsbeispiel,
- Figur 7: zeigt eine schematische Darstellung einer Draufsicht auf eine Gehäusevorderseite 26 gemäß dem Ausführungsbeispiel,
- Figur 8: zeigt eine schematische Darstellung einer Draufsicht auf eine Gehäuserückseite 27 gemäß dem Ausführungsbeispiel.

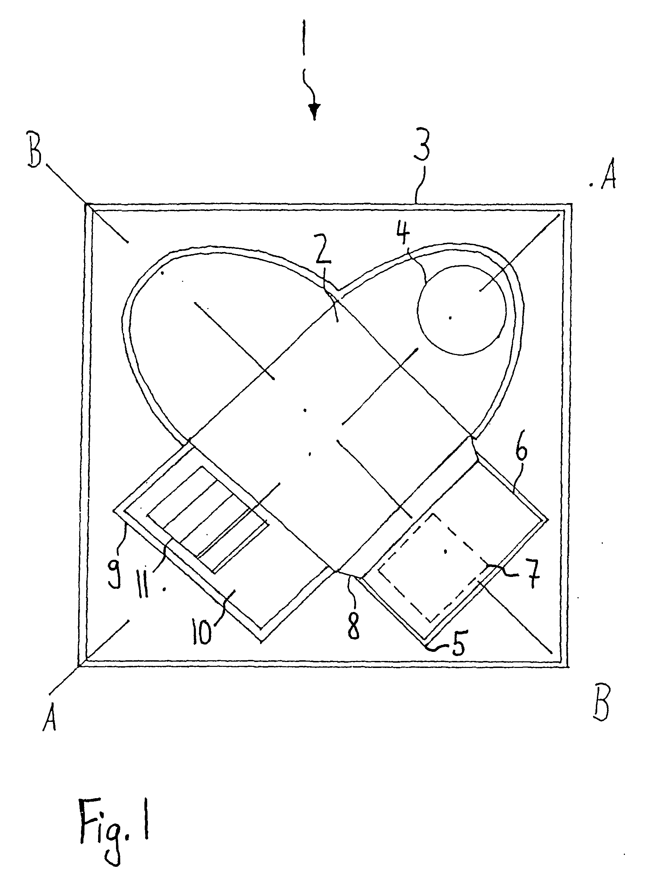

Figur 1 zeigt eine schematische Darstellung einer Draufsicht auf ein Luftaustauschsystem 1 gemäß einem Ausführungsbeispiel.

Das Luftaustauschsystem 1 ist von einem quadratischen Gehäuse 3 umschlossen. Bei der in Figur 1 gezeigten Draufsicht ist die Vorderseite des Gehäuses 3 abgenommen. Das Gehäuse 3 weist im Ausführungsbeispiel Kunststoff auf, ist aber auch aus anderen Materialien fertigbar.

Mittig in dem Gehäuse 3 ist ein quadratischer Plattenwärmetauscher 2 angeordnet, insbesondere aus gut wärmeleitendem Metall, wobei in der Draufsicht gemäß Figur 1 nur die oberste Platte des Plattenwärmetauschers 2 sichtbar ist. Die Seitenlänge des Plattenwärmetauschers 2 entspricht knapp der Hälfte der Seitenlänge des Gehäuses 3. Der Plattenwärmetauscher 2 ist in einem Winkel von 45° bezogen auf das Gehäuse 3 gedreht angeordnet.

Oberhalb der rechten oberen Seite des Plattenwärmetauschers 2 ist eine kreisrunde Außenlufteinlaßöffnung 4 in der Unterseite des Gehäuses 3 vorgesehen. Um die Außenlufteinlaßöffnung 4 ist eine auf der Unterseite des Gehäuses 3 aufsetzende, gekrümmte Wand vorgesehen, die am oberen sowie am unteren Ende der rechten oberen Seite des Plattenwärmetauschers 2 abschließt.

Auf der linken oberen Seite des Plattenwärmetauschers 2 ist eine ähnlich geformte Wand vorgesehen, die am oberen sowie am unteren Ende der linken oberen Seite des Plattenwärmetauschers 2 abschließt. In der hier nicht gezeigten Vorderseite des Gehäuses 3 ist eine Öffnung vorgesehen, die beim Aufsetzen der Vorderseite auf das Gehäuse 3 innerhalb dieser Wand angeordnet ist.

An der rechten unteren Seite des Plattenwärmetauschers 2 ist ein Fortluft-Lüftergehäuse 5 mit einem Fortluftradiallüfter 6 sowie ein zwischen dem Fortluftradiallüfter 6 und dem Plattenwärmetauscher 2 angeordneter Trichter 8 vorgesehen. Der Trichter 8 setzt auf der gesamten Breite der rechten unteren Seite des Plattenwärmetauschers 2 an und verjüngt sich auf einer Strecke etwa einem Achtel der Seitenlänge des Plattenwärmetauschers 2 um einen Winkel von 30°. Auf der gesamten Breite des Auslaßseite des Trichters 8 setzt der Fortluftradiallüfter 6 an, von dem in der Draufsicht in Figur 1 lediglich die Verkleidung erkennbar ist. Die Drehachse des Fortluftradiallüfters 6 ist dabei senkrecht auf der Höhe der Mitte der rechten unteren Seite des Plattenwärmetauschers 2 ausgerichtet. Der Durchmesser bzw. die Breite des Fortluftradiallüfters 6 entspricht dabei in etwa der Auslaßseite des Trichters 8. Die Tiefe des Fortluftradiallüfters 6 entspricht ungefähr der Hälfte seiner Breite. Der Fortluftradiallüfter 6 ist von einem Fortluft-Lüftergehäuse 5 umschlossen, das auf seiner Unterseite eine in Figur 1 gestrichelt dargestellte, rechteckige Fortluftauslaßöffnung 7 aufweist. Diese Fortluftauslaßöffnung 7 ist dabei von der Mitte des Fortluftradiallüfters 6 ausgehend etwas nach rechts oben versetzt angeordnet.

An der linken unteren Seite des Plattenwärmetauschers 2 setzt ein von einem dünnwandigen Zuluft-Lüftergehäuse 9 umschlossener Zuluftansaugradiallüfter 10 an. Dabei ist die Drehachse des Zuluftansaugradiallüfters 10 orthogonal zu der linken unteren Seite des Plattenwärmetauschers 2 auf der Höhe deren Mitte angeordnet. Der Durchmesser des Zulaufansaugradiallüfters 10 bzw. seine Breite entspricht in etwa der Seitenlänge des Plattenwärmetauschers 2, seine Tiefe entspricht ungefähr der Hälfte seiner Breite. In dem linken oberen Bereich des Zuluftansaugradiallüfters 10 ist eine rechteckige Zulufteinlaßöffnung angeordnet, durch die mehrere Lüfterschaufeln des Zuluftansaugradiallüfters 10 erkennbar sind. Diese sind im Ausführungsbeispiel parallel zur Drehachse des Zuluftansaugradiallüfters 10 angeordnet, können jedoch auch schräg zu dieser oder gekrümmt verlaufen.

Ein erste Schnittlinie A-A verläuft durch die linke untere sowie durch die rechte obere Ecke des Gehäuses 3. Eine weitere Schnittlinie B-B verläuft durch die linke obere sowie durch die rechte untere Ecke des Gehäuses 3.

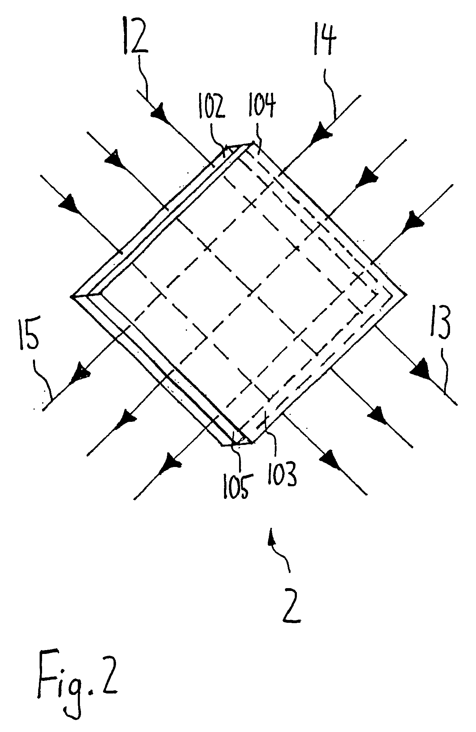

Figur 2 zeigt eine schematische, perspektivische Darstellung des in Figur 1 gezeigten Plattenwärmetauschers 2 sowie eine grafische Veranschaulichung der den Plattenwärmetauscher 2 durchfließenden Luftströme gemäß dem Ausführungsbeispiel.

Der Plattenwärmetauscher 2 umfaßt drei übereinander angeordnete, quadratische Metallplatten, die in Figur 2 jeweils auf einer Ecke stehend dargestellt sind. Die untere und die mittlere Platte des Plattenwärmetauschers 2 weisen auf der linken oberen Seite einen schlitzartigen Warmlufteinlaß 102 und auf der rechten unteren Seite einen schlitzartigen Kaltluftauslaß 103 auf. Auf der linken unteren sowie auf der rechten oberen Seite ist die untere Platte mit der mittleren Platte des Plattenwärmetauschers 2 jeweils mit einer durchgehenden Wand verbunden. An der rechten oberen Seite des Plattenwärmetauschers 2 befindet sich zwischen der mittleren und der oberen Platte ein schlitzartiger Kaltlufteinlaß 104. An der linken unteren Seite des Plattenwärmetauschers 2 ist zwischen der mittleren und der oberen Platte des Plattenwärmetauschers 2 ein schlitzartiger Warmluftauslaß 105 vorgesehen. An der linken oberen sowie an der rechten unteren Seite des Plattenwärmetauschers 2 ist zwischen der mittleren und der oberen Platte jeweils eine Wand vorgesehen.

Gemäß der Darstellung in Figur 2 fließt ein Abluftstrom 12 in den Warmlufteinlaß 102 hinein, durchströmt den Plattenwärmetauscher 2 und tritt auf der gegenüberliegenden Seite als Fortluftstrom 13 aus dem Kaltluftauslaß 103 aus. Der dabei von dem Abluftstrom 12 durchflossene Bereich des Plattenwärmetauschers 2 wird auch als Abkühlseite bezeichnet. Ein Außenluftstrom 14 tritt durch den Kaltlufteinlaß 104 in den Plattenwärmetauscher 2 ein, durchströmt diesen und tritt als Zuluftstrom 15 auf der gegenüberliegenden Seite aus dem Warmluftauslaß 105 aus. Der dabei von dem Außenluftstrom 14 durchflossenen Bereich des Plattenwärmetauschers 2 wird auch Erwärmseite des Plattenwärmetauschers 2 genannt.

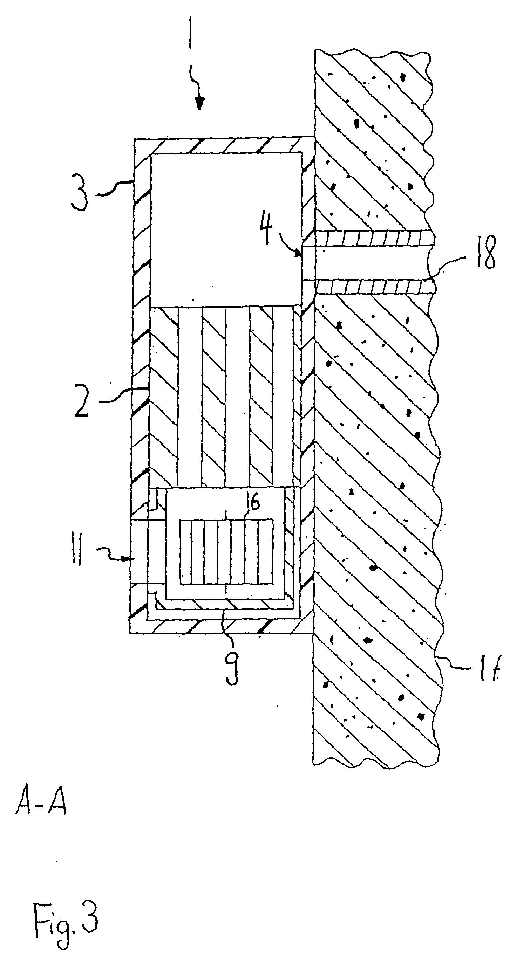

Figur 3 zeigt eine schematische Darstellung eines Querschnitts entlang der Schnittlinie A-A eines an einer Außenwand 17 befestigten Luftaustauschsystems 1 gemäß dem Ausführungsbeispiel. In Figur 3 ist die Erwärmseite des Plattenwärmetauschers 2 betrachtet.

Das Luftaustauschsystem 1 liegt mit der Rückseite seines Gehäuses 3 an der Vorderseite der Außenwand 17 an und befindet sich dementsprechend im Gebäudeinneren. Aus der Querschnittsdarstellung in Figur 3 ist ersichtlich, daß die diagonale Höhe des Luftaustauschsystems 1 in etwa dem Dreifachen seiner Tiefe entspricht. Dabei gliedert sich das Innere des Gehäuses 3 in einen zuoberst angeordneten Außenlufteinlaßbereich, in einen mittig angeordneten Plattenwärmetauscherbereich und in einen zuunterst angeordneten Zuluftauslaßbereich.

In dem Außenlufteinlaßbereich ist an der Rückseite des Gehäuses 3 die Außenlufteinlaßöffnung 4 ausgebildet, an die sich außenwandseitig ein waagerechtes Außenluftzufuhrrohr 18 anschließt. In dem Plattenwärmetauscherbereich ist der Plattenwärmetauscher 2 angeordnet, der drei parallele, in der Darstellung gemäß Figur 3 von oben nach unten verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf. In dem Zuluftauslaßbereich ist ein Zuluft-Lüfterrad 16 innerhalb des Zuluft-Lüftergehäuses 9 angeordnet. Das Zuluft-Lüfterrad 16 ist dabei horizontal mittig angeordnet. Auf gleicher Höhe mit den Lüfterschaufeln des Zuluft-Lüfterrads 16 ist in der Vorderseite des Gehäuses 3 sowie in der linken Seite des Zuluft-Lüftergehäuses 9 eine Zuluftauslaßöffnung 11 vorgesehen, deren Höhe der Breite der Lüfterschaufeln entspricht.

Das Zuluft-Lüftergehäuse setzt auf dem linken sowie auf dem rechten Ende der Unterseite des Plattenwärmetauschers 2 an, verläuft beidseitig vertikal nach unten und weist unmittelbar vor der Unterseite des Gehäuses 3 eine waagerechte Unterseite auf.

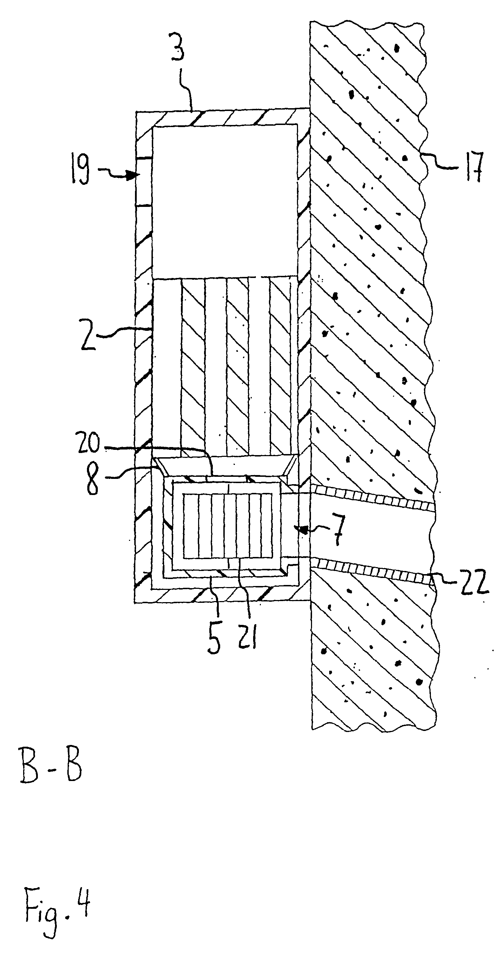

Figur 4 zeigt eine schematische Darstellung eines Querschnitts entlang der Schnittlinie B-B des an der Außenwand 17 befestigten Luftaustauschsystems 1 gemäß dem Ausführungsbeispiel. In Figur 4 ist die Abkühlseite des Plattenwärmetauschers 2 betrachtet.

Das Innere des Gehäuses 3 gliedert sich dabei in einen oberen Ablufteinlaßbereich, in einen mittleren Plattenwärmetauscherbereich und in einen unteren Fortluftauslaßbereich. Im Ablufteinlaßbereich ist auf der Vorderseite des Gehäuses 3 eine Ablufteinlaßöffnung 19 vorgesehen. Im Plattenwärmetauscherbereich ist der Plattenwärmetauscher 2 angeordnet, der vier parallele, vertikal verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf. Der Fortluftauslaßbereich umfaßt einen hinsichtlich der Bauart, hinsichtlich der Größe und hinsichtlich der Ausrichtung mit dem in Figur 3 gezeigten Zuluftlüfterrad 16 identisches Fortlüftlüfterrad 21. Das Fortluft-Lüfterrad 21 ist zentriert innerhalb des Fortluft-Lüftergehäuses 5 angeordnet. Horizontal auf gleicher Höhe mit dem Fortluft-Lüfterrad 21 weist das Fortluft-Lüftergehäuse 5 auf der rechten Seite sowie das Gehäuse 3 auf seiner Rückseite jeweils eine Fortluftauslaßöffnung 7 auf. An dieser Fortluftauslaßöffnung 7 setzt ein Fortluftauslaßrohr 22 an, das leicht nach rechts unten geneigt verläuft. Mittig auf der Oberseite des Fortluft-Lüftergehäuses 5 ist eine Fortluftzuführungsöffnung 20 vorgesehen, deren Breite ungefähr einem Drittel der Gesamtbreite des Fortluft-Lüftergehäuses 5 entspricht. Zwischen dem linken und dem rechten Ende der Unterseite des Plattenwärmetauschers 2 und der linken und rechten Seite der Oberseite des Fortluft-Lüftergehäuses 5 ist der Trichter 8 angeordnet.

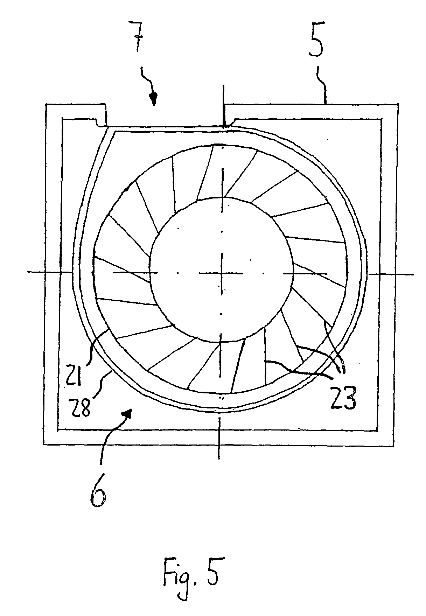

Figur 5 zeigt eine schematische Darstellung einer Draufsicht auf einen in dem Fortluft-Lüftergehäuse 5 angeordneten Fortluftradiallüfter 6 senkrecht zu seiner Drehachse gemäß dem Ausführungsbeispiel.

Dabei umschließt das dünnwandige Fortluft-Lüftergehäuse 5 den Fortluftradiallüfter 6 und weist eine quadratische Form auf. In einem linken Bereich seiner Oberseite beinhaltet das Fortluft-Lüftergehäuse 5 die Fortluftauslaßöffnung 7, die sich in etwa über ein Drittel seiner Oberseite erstreckt. Zentriert innerhalb des Fortluft-Lüftergehäuses 5 ist der Fortluftradiallüfter 6 angeordnet, der sich in das Fortluft-Lüfterrad 21 sowie in eine Lüfterschnecke 28 gliedert.

Das Fortluft-Lüfterrad 21 weist eine Vielzahl von Lüfterschaufeln 23 auf und ist im vorliegenden Ausführungsbeispiel rechtsdrehend ausgebildet. In der Draufsicht in Figur 5 befinden sich die Lüfterschaufeln 23 auf einem konzentrisch zur Drehachse verlaufenden Kreisring des Fortluft-Lüfterrades 21 und verlaufen von innen nach außen bezüglich der Drehrichtung jeweils schräg nach vorne. Der Innendurchmesser des Fortluft-Lüfterrades 21 beträgt dabei vier Zehntel der Seitenlänge des Fortluft-Lüftergehäuses 5. Der Außendurchmesser des Fortluft-Lüfterrades 21 beträgt ungefähr acht Zehntel der Seitenlänge des Fortluft-Lüftergehäuses 5.

Die dünnwandige Lüfterschnecke 28 weist hartes Kunststoffmaterial auf und verläuft in geringem Abstand außerhalb der Außenseite des Fortluft-Lüfterrades 21. Im rechten oberen sowie im unteren Bereich des Fortluftradiallüfters 6 verläuft die Lüfterschnecke 28 kreisförmig in geringem Abstand um das Fortluft-Lüfterrad 21 herum. Im linken oberen Bereich des Fortluftradiallüfters 6 ist ein sich in Drehrichtung verbreiternder Auslaßbereich der Lüfterschnecke 28 vorgesehen, der unterhalb der Fortluftauslaßöffnung 7 auf der gesamten Breite der Fortluftauslaßöffnung 7 endet.

Der Bereich zwischen dem Außenradius des Fortlüfterrads 21 und der Innenwand der Lüfterschnecke 28 ist relativ gering ausgebildet. Dementsprechend kann sich nur eine geringe Menge von Kondenswasser innerhalb der Lüfterschnecke 28 sammeln.

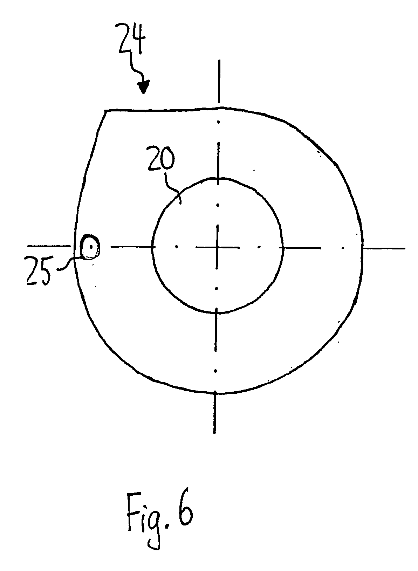

Figur 6 zeigt eine schematische Darstellung einer Draufsicht auf eine Lüfterschneckenabdeckung 24 der in Figur 5 gezeigten Lüfterschnecke 28 gemäß dem Ausführungsbeispiel.

Die auf die Lüfterschnecke 28 aufsetzbare Lüfterschneckenabdeckung 24 entspricht hinsichtlich der äußeren Form der Lüfterschnecke 28. Die Lüfterschneckenabdeckung 24 umfaßt eine in bezug auf das Fortluft-Lüfterrad 21 zentrierte, runde Fortluftzuführungsöffnung 20, die einen etwas geringer als den Innendurchmesser des Fortluft-Lüfterrades 21 ausgebildeten Durchmesser aufweist. Im linken Bereich der Lüfterschneckenabdeckung 24 ist eine runde Kondenswasserzuführungsöffnung 25 vorgesehen, die einen Durchmesser von ungefähr einem Sechstel des Durchmessers der Fortluftzuführungsöffnung 20 einnimmt.

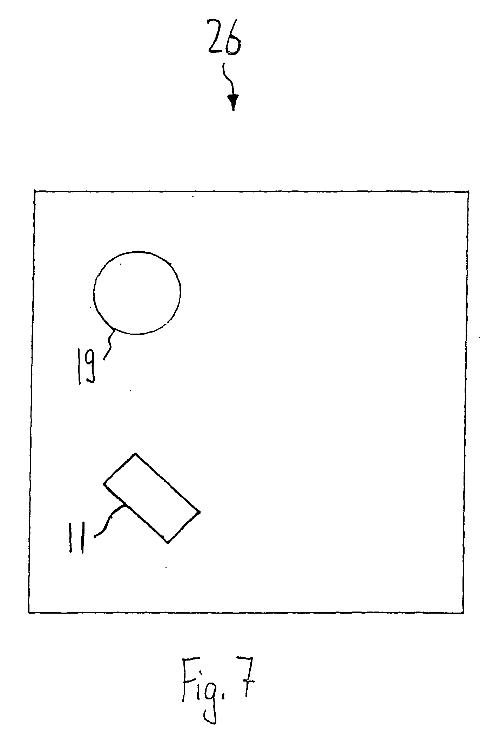

Figur 7 zeigt eine schematische Darstellung einer Draufsicht auf eine Gehäusevorderseite 26 gemäß dem Ausführungsbeispiel.

Die in Richtung des Gebäudeinneren gerichtete, quadratische Gehäusevorderseite 26 ist auf ein in Figur 1 dargestelltes Luftaustauschsystem 1 aufsetzbar und schließt auf allen vier Seiten mit dessen Gehäuse 3 ab. Im linken oberen Bereich der Gehäusevorderseite 26 ist die kreisförmige Ablufteinlaßöffnung 19 angeordnet. Im linken, unteren Bereich der Gehäusevorderseite 26 ist die rechteckige Zuluftauslaßöffnung 11 angeordnet, die sich über der Zuluftauslaßöffnung 11 des Zuluftansaugradiallüfters 10 befindet.

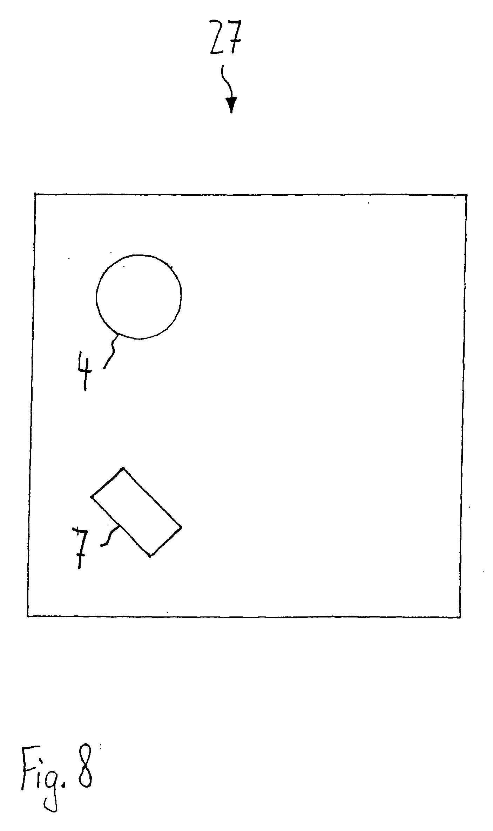

Figur 8 zeigt eine schematische Darstellung einer Draufsicht auf eine Gehäuserückseite 27 gemäß dem Ausführungsbeispiel.

Die quadratische Gehäuserückseite 27 bildet die der Außenwand zugewandte Unterseite des in Figur 1 gezeigten Luftaustauschsystems 1 und schließt auf allen vier Seiten mit dem Gehäuse 3 ab. Die Gehäuserückseite 27 weist im linken oberen Bereich die runde Außenlufteinlaßöffnung 4 auf, die auch in Figur 1 und in Figur 3 gezeigt ist. Im linken unteren Bereich der Gehäuserückseite 27 ist die rechteckige Fortluftauslaßöffnung 7 vorgesehen, die unterhalb der Fortluftauslaßöffnung 7 des Fortluftradiallüfters 6 angeordnet ist.

Wie in Figur 2 beschrieben, besteht zwischen dem Abluftstrom 12 und dem Außenluftstrom 14 ein Temperaturgefälle, das im Betrieb des Luftaustauschsystems 1 durch den Plattenwärmetauscher 2 reduziert wird. Dabei wird der Abluftstrom 12 abgekühlt und der Außenluftstrom 14 erwärmt. Der Abluftstrom 12 sondert bei der Abkühlung Kondenswasser ab, das an der Abkühlseite des Plattenwärmetauschers 2, insbesondere an dem Kaltluftauslaß 103 auftritt.

Wie in Figur 1 sowie in Figur 3 dargestellt, wird durch den Zuluftansaugradiallüfter 10 bzw. durch das Zuluftlüfterrad 16 kalte Außenluft angesaugt. Dieser Außenluftstrom 14 tritt durch das in Figur 3 gezeigte Außenluftzufuhrrohr 18 und durch die in Figur 8 besonders gut zu erkennende Außenlufteinlaßöffnung 4 auf der Gehäuserückseite 27 in das Luftaustauschsystem 1 ein. Dann strömt der Außenluftstrom 14 durch die Luftführungen des Plattenwärmetauschers 2 und wird dabei erwärmt. Anschließend fließt die nun als Zuluftstrom 15 bezeichnete, erwärmte Luft durch die Zuluftauslaßöffnung 11 auf der Gehäusevorderseite 26 in das Gebäudeinnere.

Wie in Figur 1 und in Figur 4 ersichtlich, saugt der Fortluftradiallüfter 6 bzw. das Fortluft-Lüfterrad 21 durch die Bewegung der Lüfterschaufeln 23 gleichzeitig dazu warme und feuchte Abluft aus dem Gebäudeinneren an. Dieser Abluftstrom 12 fließt durch die Ablufteinlaßöffnung 19 auf der in Figur 7 dargestellten Gehäusevorderseite 26 in die Luftführungen des Plattenwärmetauschers 2. Beim Durchströmen des Plattenwärmetauschers 2 wird der Abluftstrom 12 gekühlt, wobei Kondenswasser entsteht. Der Abluftstrom 12 gelangt danach durch den Trichter 8 und durch die in Figur 6 besonders gut erkennbare Fortluftzuführungsöffnung 20 in das Fortluft-Lüftergehäuse 5. Von dort aus wird die nun als Fortluftstrom 13 bezeichnete Luft - in Folge der Bewegung der Lüfterschaufeln 23 sowie in Folge der Druckdifferenz, die zwischen dem Innenraum der Lüfterschnecke 28 und dem außerhalb der Fortluftauslaßöffnung 7 gelegenen Bereich herrscht - durch die Fortluftauslaßöffnung 7 der in Figur 8 erkennbaren Gehäuserückseite 27 aus dem Luftaustauschsystem 1 sowie durch das Fortluftauslaßrohr 22 auf eine Außenseite des Gebäudes befördert.

Beim Abkühlprozeß des warmen und feuchten Abluftstroms 12 bildet sich Kondenswasser, das auf der Abkühlseite des Plattenwärmetauschers 2 entsteht. Dieses Kondenswasser fließt durch Schwerkraftwirkung über den Trichter 8 durch die in Bezug auf die Schwerkraftrichtung unten angeordnete, in Figur 6 gezeigte Kondenswasserzuführungsöffnung 25 in den Innenbereich des Fortluftradiallüfters 6.

Übersteigt die Menge an Kondenswasser den gering ausgebildeten, in Figur 5 besonders gut zu erkennenden Zwischenraum zwischen der Innenwand der Lüfterschnecke 28 und dem Außenradius des Fortluft-Lüfterrads 21, so wird diese Menge an Kondenswasser durch die Lüfterschaufeln 23 durch die Fortluftauslaßöffnung 7 der Gehäuserückseite 27 aus dem Luftaustauschsystem 1 sowie durch das Fortluftauslaßrohr 22 auf eine Außenseite des Gebäudes befördert.

## Patentansprüche

1. Luftaustauschsystem für die Belüftung eines Raums eines Gebäudes, das einen Wärmetauscher, insbesondere mit einem Plattenwärmetauscher (2), der eine Erwärmseite und eine Abkühlseite aufweist, sowie wenigstens einen im Auslaßbereich der Abkühlseite angeordneten Lüfter (6) mit Lüfterschaufeln (23) aufweist, **dadurch gekennzeichnet, dass** der Wärmetauscher (2) so angeordnet ist, daß sich an der Abkühlseite bildendes Kondenswasser durch Schwerkraftwirkung in den Bereich der Lüfterschaufeln (23) des Lüfters (6) fließt, wobei der Lüfter (6) so angeordnet ist, daß das Kondenswasser durch die Bewegung der Lüfterschaufeln (23) in eine Fortluftöffnung (7) des Luftaustauschsystems (1) förderbar ist.

2. Luftaustauschsystem nach Anspruch 1,
**dadurch gekennzeichnet, daß**
der Lüfter (6) als Radiallüfter ausgebildet ist, dessen Drehachse im wesentlichen parallel zu einer Strömungsrichtung der durch die Abkühlseite strömenden Luft ausgerichtet ist.

3. Luftaustauschsystem nach Anspruch 1 oder 2,
**dadurch gekennzeichnet, daß**
zwischen dem Wärmetauscher (2) und dem Lüfter (6) ein trichterförmiger Kondenswasserleitrahmen (8) angeordnet ist.

4. Luftaustauschsystem nach einem der vorhergehenden Ansprüche,
**dadurch gekennzeichnet, daß**
der Lüfter (6) an der dem Auslaßbereich der Abkühlseite
des Wärmetauschers (2) zugewandten Seite eine Lüfterabdekkung (24) mit einer vorzugsweise mittigen Luftzuführungsöffnung (10) sowie mit einer Kondenswasserzuführungsöffnung (11) an einem äußeren Bereich aufweist.

5. Luftaustauschsystem nach einem der vorhergehenden Ansprüche,
**dadurch gekennzeichnet, daß**
der Wärmetauscher (2) und/oder der Lüfter (6) gegenüber
der Erdanziehungsrichtung geneigt, insbesondere um einen Winkel im Bereich von 45° geneigt ausgerichtet sind.

6. Luftaustauschsystem nach einem der vorhergehenden Ansprüche,
**dadurch gekennzeichnet, daß**
das Luftaustauschsystem (1) von einem Gehäuse (3) mit einer Gehäusevorderseite (26) und mit einer Gehäuserückseite (27) umschlossen ist.

7. Luftaustauschsystem nach Anspruch 6,
**dadurch gekennzeichnet, daß**
an der Gehäusevorderseite (26) eine Ablufteinlaßöffnung (19) sowie eine Zulufteinlaßöffnung (11) vorgesehen ist, wobei die Ablufteinlaßöffnung (19) an einem Einlaßbereich der Abkühlseite des Wärmetauschers (2) angeordnet ist und wobei die Zulufteinlaßöffnung (11) an einem Auslaßbereich der Erwärmseite des Wärmetauschers (2) angeordnet ist.

8. Luftaustauschsystem nach Anspruch 6 oder 7,
**dadurch gekennzeichnet, daß**
sich an der Gehäuserückseite (26) eine Außenlufteinlaßöffnung (4) sowie eine Fortluftauslaßöffnung (7) befindet, wobei die Außenlufteinlaßöffnung (4) an einem Einlaßbereich der Erwärmseite des Wärmetauschers (2) angeordnet ist und wobei die Fortluftauslaßöffnung (7) an einem Auslaßbereich der Abkühlseite des Wärmetauschers (2) angeordnet ist.

9. Luftaustauschsystem nach Anspruch 8 mit einer Außenwand (17), an deren Innenseite die Gehäuserückseite (26) angebracht ist, wobei in der Außenwand (17) ein insbesondere schräg nach unten verlaufendes Fortluftauslaßrohr (22) zur Ausleitung des Kondenswassers vorgesehen ist, wobei der Rand der Fortluftauslaßöffnung (7) mit dem Rand des Fortluftauslaßrohrs (22) abschließt.

## Claims

1. Air exchange system for ventilating a room of a building, comprising a heat exchanger, in particular a plate heat exchanger (2), with a heating side and a cooling side, and at least one fan (6) with fan blades (23) located in the outlet area of the cooling side, **characterised in that** the heat exchanger (2) is so arranged that condensed water forming on the cooling side flows into the area of the fan blades (23) of the fan (6) under the influence of gravity, the fan (6) being so arranged that the condensed water can be conveyed into a discharge air outlet (7) of the air exchange system (1) by the movement of the fan blades (23).

2. Air exchange system according to claim 1,
**characterised in that**
the fan (6) is designed as a centrifugal fan, the axis of rotation of which is aligned substantially parallel to a direction of flow of the air flowing through the cooling side.

3. Air exchange system according to claim 1 or 2,
**characterised in that**
a funnel-shaped condensed water guide frame (8) is arranged between the heat exchanger (2) and the fan (6).

4. Air exchange system according to any of the preceding claims,
**characterised in that**
the fan (6) comprises a fan cover (24) with a preferably central air supply opening (10) and with a condensed water supply opening (11) in an outer area on the side adjacent to the outlet area of the cooling side of the heat exchanger (2).

5. Air exchange system according to any of the preceding claims,
**characterised in that**
the heat exchanger (2) and/or the fan (6) are/is inclined relative to the direction of gravitational force, in particular by an angle of around 45°.

6. Air exchange system according to any of the preceding claims,
**characterised in that**
the air exchange system (1) is enclosed by a housing (3) with a housing front (26) and a housing back (27).

7. Air exchange system according to claim 6,
**characterised in that**
an exhaust air inlet (19) and a supply air inlet (11) are provided on the housing front (26), the exhaust air inlet (19) being located in an inlet area of the cooling side of the heat exchanger (2) and the supply air inlet (11) being located in an outlet area of the heating side of the heat exchanger (2).

8. Air exchange system according to claim 6 or 7,
**characterised in that**
an outdoor air inlet (4) and a discharge air outlet (7) are provided on the housing back (26), the outdoor air inlet (4) being located in an inlet area of the heating side of the heat exchanger (2) and the discharge air outlet (7) being located in an outlet area of the cooling side of the heat exchanger (2).

9. Air exchange system according to claim 8, comprising an external wall (17) to the inside of which the housing back (26) is attached, a discharge air outlet pipe (22) running in particular downwards at an angle to drain the condensed water is provided in the external wall (17) the edge of the discharge air outlet (7) terminating at the edge of the discharge air outlet pipe (22).

## Revendications

1. Système de renouvellement d'air pour l'aération d'une pièce d'un bâtiment, comportant une échangeur thermique, ayant notamment un échangeur thermique à plaques (2), comportant un côté échauffement et un côté refroidissement, ainsi qu'au moins un ventilateur (6) disposé dans la zone de sortie du côté refroidissement, et ayant des pales (23),
**caractérisé en ce que** l'échangeur thermique (2) est disposé de façon à ce que de l'eau de condensation se formant du côté refroidissement s'écoule sous l'effet de la force de gravité dans la zone des pales (23) du ventilateur (6), le ventilateur (6) étant disposé de façon à permettre le transport de l'eau de condensation dans un orifice d'air d'échappement (7) du système de renouvellement d'air (1) par le mouvement des pales du ventilateur (23).

2. Système de renouvellement d'air selon la revendication 1,
**caractérisé en ce que** le ventilateur (6) est conçu en tant que ventilateur radial, dont l'axe de rotation est orienté sensiblement parallèlement à un sens d'écoulement de l'air passant dans le côté refroidissement.

3. Système de renouvellement d'air selon la revendication 1 ou 2,
**caractérisé en ce qu'**un cadre conducteur d'eau de condensation (8) en forme d'entonnoir est disposé entre l'échangeur thermique (2) et le ventilateur (6).

4. Système de renouvellement d'air selon l'une quelconque des revendications précédentes,
**caractérisé en ce que** du côté dirigé vers le côté refroidissement de l'échangeur thermique (2), le ventilateur (6) comporte un couvercle (24) ayant un orifice d'alimentation d'air (10), de préférence central, ainsi qu'un orifice d'alimentation d'eau de condensation (11) sur une zone extérieure.

5. Système de renouvellement d'air selon l'une quelconque des revendications précédentes,
**caractérisé en ce que** l'échangeur thermique (2) et/ou le ventilateur (6) est incliné, notamment d'un angle de l'ordre de 45°, par rapport à la direction d'attraction terrestre.

6. Système de renouvellement d'air selon l'une quelconque des revendications précédentes,
**caractérisé en ce que** le système de renouvellement d'air (1) est entouré d'un boîtier (3), ayant une face avant (26) et une face arrière (27).

7. Système de renouvellement d'air selon la revendication 6,
**caractérisé en ce que** sur la face avant du boîtier (26), est prévu un orifice d'entrée d'air vicié (19) ainsi qu'un orifice d'entrée d'air frais (19), l'orifice d'entrée d'air vicié (19) étant disposé sur une zone d'entrée du côté refroidissement de l'échangeur thermique (2) et l'orifice d'entrée d'air frais (11) étant disposé sur une zone de sortie du côté échauffement de l'échangeur thermique (2).

8. Système de renouvellement d'air selon la revendication 6 ou 7,
**caractérisé en ce que** sur la face arrière du boîtier (26) se trouvent un orifice d'entrée d'air extérieur (4), ainsi qu'un orifice de sortie d'air d'échappement (7), l'orifice d'entrée d'air extérieur (4) étant disposé dans une zone d'entrée du côté échauffement de l'échangeur thermique (2) et l'orifice de sortie de l'air d'échappement (7) étant disposé dans une zone de sortie du côté refroidissement de l'échangeur thermique (2).

9. Système de renouvellement d'air selon la revendication 8, avec une paroi extérieure (17), sur la face intérieure de laquelle la face arrière du boîtier (26) est montée, un tube de sortie d'air d'échappement (22) notamment incliné vers le bas étant prévu dans la paroi extérieure (17), pour l'évacuation de l'eau de condensation, le bord de l'orifice de sortie d'air d'échappement (7) se terminant sur le bord du tube de sortie de l'air d'échappement (22).
